# EUROPEAN PATENT APPLICATION

(11) **EP 1 241 499 A1**
(43) Date of publication of application: **18.09.2002**
(21) Application number: 02251611.6
(22) Date of filing: 07.03.2002
(51) Int. Cl.: G02B 6/34

(54) **Laser with depolariser**

(30) Priority: 13.03.2001 US 804986
(71) Applicant: JDS Uniphase Inc., San Jose, CA 95131 (US)
(72) Inventor: Fidric, Bernard G., Cupertino, CA 95014 (US); Sanders, Steven M., Belmont, CA 94002 (US)
(74) Representative: McKechnie, Neil

(57) **Abstract**

A depolarized optical source has a beam combiner by which light in orthogonal polarization modes is comoined together. The beam combiner may be used in conjunction with a polarization maintaining 3dB splitter, into which is coupled light in both polarization modes that is divided by magnitude, allowing both polarization modes to be output along each of multiple output paths which are coupled, respectively, into multiple input paths of the beam combiner. The polarization modes along one of the output paths are inverted and phase decorrelated prior to being combined by the beam combiner. In another embodiment, a recirculation path is used with the polarization beam combiner. In a different embodiment, the combiner uses a 3dB coupler to provide a dual output.

## Description

### FIELD OF THE INVENTION

The present invention relates generally to the field of optical fiber gain media and, more specifically, to high efficiency pumping sources for such gain media.

### BACKGROUND OF THE INVENTION

An optical fiber gain medium is a device that increases the amplitude of an input optical signal. If the optical signal at the input to such an amplifier is monochromatic, the output will also be monochromatic, with the same frequency. A conventional fiber amplifier comprises a gain medium, such as a glass fiber core doped with an active material, into which is coupled an input signal. Excitation occurs from the absorption of optical pumping energy by the core. The optical pumping energy is within the absorption band of the active material in the core, and when the optical signal propagates through the core, the absorbed pump energy causes amplification of the signal transmitted through the fiber core by stimulated emission. Optical amplifiers are typically used in a variety of applications including but not limited to amplification of optical signals such as those that have traveled through a long length of optical fiber in optical communication systems.

Typical optical gain media are pumped by coupling the desired pump energy into the gain fiber. For example, an erbium-doped fiber may be pumped by coupling into the fiber a pump signal having a wavelength of 980 nm. This wavelength is within the absorption band of the erbium, and results in the generation of optical gain in the wavelength range of 1550 nm. Thus, for an optical amplifier having a signal with a wavelength of 1550 nm passing through the erbium-doped fiber, the signal is amplified by the stimulated emission of 1550 nm energy when the fiber is pumped by a 980 nm pump source. In another type of gain medium, referred to as a Raman gain medium, amplification is provided through Raman scattering. Typically, the source for pumping an optical fiber gain medium is a laser, quite often a laser diode or a fiber laser pumped by one or more laser diodes. In the case of laser diode Raman pump sources, there is usually a dominant plane of polarization, such that the optical energy is linearly polarized.

When using polarizec light for pumping a fiber gain medium, the gain medium can suffer from large "polarization-dependent gain" (POG) effects. This term refers to the fact that the gain in an optical amplifier may depend on the polarization of the signal. Such polarization dependent gain is problematic and becomes even more so when a number of amplifiers are cascaded in a long haul fiber optic link, creating a cumulative effect.

One approach to reducing the effect of POG is to use pump source light that is "unpolarized," or that has a low degree of polarization. Unpolarized light is light that does not have a dominant polarization at an instantaneous point in time, or for which the dominant polarization changes more quickly than an amplifier response time. The use of unpolarized light to pump an optical gain medium therefore alleviates the POG effects, making it desirable for many optical pumping applications.

In the past, different techniques have been used to "depolarize" the light from a polarized light source. One conventional method for converting polarized light to depolarized light is to join together two polarization maintaining ("PM") optical fibers so that their axes of polarization are at an angle of 45° relative to each other. Certain variations on this method are shown in U.S. Patent No. 5,692,082 in which polarized light from a laser diode is coupled into a PM fiber such that a plane of polarization of the light is at an angle of 45° relative to the polarization axis of the fiber. The length of the PM fiber is set so that an optical path length difference for the two polarization modes is greater than the coherence length of the incident light. As such, the two polarization modes are phase decorrelated, and the polarization state of the light output from the fiber is effectively randomized.

### SUMMARY OF THE INVENTION

In accordance with the present invention, a depolarized optical source is provided that uses a beam combiner. In one embodiment, the source uses an optical generator, such as a semiconductor laser diode, and the beam combiner is a polarization beam combiner ("PBC"). The PBC couples the optical energy in each of two orthogonal polarization modes into a single output path. It is preferable that the optical generator is grating stabilized and operating in coherence collapse. The PBC may be a fused or polished fiber device. Alternatively, a bulk optics type or micro-optic type device may be used. The PBC has at least two input paths, each of which is polarization maintaining and each of which contains a portion of the optical energy from the optical generator. The two portions of light in the two input paths of the PBC include optical energy propagating in orthogonal optical planes having such orientation relative to the polarization axes of the input fibers that the PBC couples together the optical energy from the two input paths and outputs it along a first output path.

The optical energy from the optical generator is split into two portions of light before being directed to the PBC with a splitting apparatus. The splitting apparatus includes a polarization maintaining 3dB splitter that has at least one polarization maintaining input path and two output paths. Each of the output paths of the 3dB splitter is coupled to one of the input paths of the PBC. In a preferred version of this embodiment, the output paths are polarization maintaining optical fibers, and each one of the output paths of the 3dB splitter is oriented such that one of its principal polarization axes ("slow" or "fast") is parallel to one of the principal polarization axes of the input fiber of the PBC to which it is coupled. The orientation is chosen such that the PBC effectively couples together the optical energy from both input paths and outputs it along a single output path. In order to avoid interference effects between the two portions of light that are coupled together by the PBC, it is important that a differential optical path delay be introduced between them before being coupled to the PBC. The magnitude of the relative path delay should exceed the coherence length of the optical generator, so that the two portions of light are no longer phase correlated when they enter the PBC.

In another variation of this embodiment, the 3dB splitter may have two inputs, each coupled to a separate optical generator. The two optical generators may be two different wavelengths, thereby providing an output that is relatively broad in overall wavelength. Whether there are one or two optical generators, each may also be a broadband source, so as to provide a broader band output.

In another embodiment of the invention, the splitting apparatus makes use of a PBC that is also doing the combining. In this embodiment, the light input from an optical generator along a first input path has polarization components that result in different portions of the input energy being output along each of two output paths. One output path of the PBC is the path along which the desired depolarized signal is output. The PBC combiner also has a second output path to which a recirculating conduit is connected. The recirculating conduit directs optical energy output along the second output path to a second input path of the polarization beam combiner. Such a conduit may be, for example, a polarization maintaining optical fiber. The polarization state of the light in the recirculation path is such that, although it is directed to the second output path of the polarization beam combiner from the first input path, when input to the second input path, it is directed to the first output path. Thus, with the recirculation conduit in place, essentially all of the optical energy input to the first input path of the polarization beam combiner is eventually output along the first output path. It is preferable that the recirculating conduit is long enough that the extra optical path length followed by light traveling through the conduit (as compared to that of light coupled directly to the first output path from the first input path) is longer than a coherence length of the optical generator. Thus, the two signals are phase decorrelated at the first output path.

In still another embodiment, the beam combiner is a polarization maintaining 3dB coupler. The optical source or sources are coupled into a polarization maintaining 3dB splitter that provides two outputs. These outputs are coupled to two inputs of the 3dB coupler, with the polarization axis of one of the inputs being rotated by 90°. The path length for one of the signals output from the splitter is also made significantly longer than that of the other, so that a relative delay is introduced to provide phase decorrelation between the two signals. The two inputs to the 3dB coupler are then combined and divided by magnitude, such that two depolarized outputs result.

### BRIEF DESCRIPTION OF THE DRAWINGS

The above and further advantages of the invention may be better understood by referring to the following description in conjunction with the accompanying drawings in which:

FIG. 1 is a schematic view of an embodiment of the invention in which a 3dB splitter is used in conjunction with a polarization beam combiner.

FIG. 2 is a schematic view of a variation of the embodiment of Figure 1 in which multiple optical generators are used.

FIG. 3 is a schematic view of an embodiment of the invention in which a recirculation loop is used with a polarization beam combiner.

FIG. 4 is a schematic view of an embodiment of the invention in which a 3dB splitter is used together with a 3dB coupler to form a dual output source.

FIG. 5 is a schematic view of an application making use of a dual output depolarized optical source.

### DETAILED DESCRIPTION

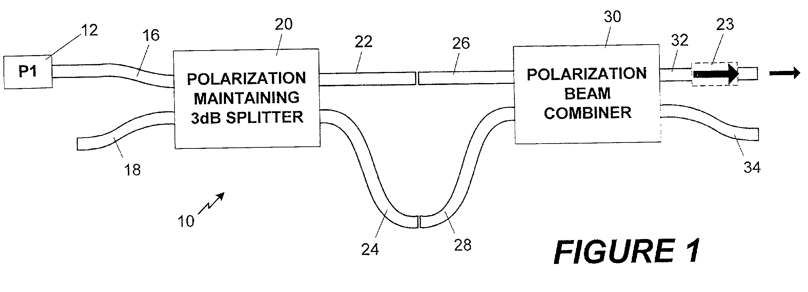

Shown in FIG. 1 is a first embodiment of a depolarized source 10 according to the present invention. Optical source 12 has a polarized output, and is labeled P1 in the drawing figure. The source 12 is grating stabilized, and operates in "coherence collapse" mode. That is, the wavelength of the source is well controlled, and has a coherence length that is relatively short. Preferably, source 12 has a coherence length of less than one meter, with longitudinal modes having a line width on the order of one gigahertz or more. The source is linearly polarized along one of the polarization axes of its respective fiber pigtail. For example, the light output from pump source 12 might be coupled along the so-called "fast axis" of the fiber pigtail 16 or, alternatively, it might be coupled along the so-called "slow axis" of fiber pigtail 16.

The PM fiber 16 is directed into a polarization maintaining 3dB splitter 20. Such a splitter is known in the art, and may be a fused fiber splitter/coupler consisting of two fused PM fibers. The fused fiber splitter is a "50/50" type splitter that divides the light from input pigtail fiber 16 by magnitude, and couples a portion of the light into each of two output fibers 22, 24, each of which are also polarization maintaining fibers (or part of polarization maintaining input fibers 16, 18). Thus, each of the output fibers 22, 24 carries approximately 50% of the light from input path 16. In an alternative embodiment, the splitter may use bulk optics, using one or more lenses *(e.g*., graded index "GRIN" lenses) to collimate the light from the fiber pigtail 16 onto a beam splitter, and then refocus the two halves of the light into each of the two output fibers 22, 24. In such an embodiment, it would be preferable if "micro-optics" were used such that the splitter could be housed in a single small package.

After passing through the polarization maintaining splitter 20, each of fibers 22, 24 contains approximately 50% of the light input to the splitter 20. These output fibers 22, 24 are spliced to input fiber pigtails 26, 28 of polarization beam combiner ("PBC") 30. Fibers 26, 28 are also polarization maintaining fibers. The polarization axes of fibers 22, 26 are properly oriented at an angle of 0° or 90° relative to one another. That is, the fast axis of fiber 22 is aligned with fast axis of fiber 26, or the fast axis of fiber 22 is aligned with the slow axis of fiber 26, such that the light contribution from source 12 that is propagating through fiber 22 and coupled into fiber 26 exits port 32 of the PBC. Similarly, the polarization axes of fibers 24, 28 are properly oriented relative to one another such that the light contribution from source 12 that is propagating through fiber 24 and coupled into fiber 28 also exits port 32 of the PBC, but with a polarization orthogonal to the light originating in fibers 22, 26. For example, the polarization axes of fibers 22 and 26 might be aligned with each other at the same angular orientation, while the polarization axes of fibers 24 and 28 are at a relative angle of 90° to each other. Those skilled in the art will recognize that it would be equally effective to orient the polarization axes of fibers 22, 26 and the polarization axes of fibers 24, 28 such that essentially all the light from source 12 exits the other port 34 of the PBC 30.

The light in input fiber pigtails 26, 28 is coupled into polarization beam combiner (PBC) 30. The total length of fibers 22 and 26 is made significantly different than the total length of fibers 24 and 28, so as to create a difference in the optical path length traveled by the two separate light beams. The difference in this optical path length is set to be greater than a coherence length of the optical pump source 12. This prevents any interference between the beams from occurring in the PBC 30. In the preferred embodiment, the PBC 30 is a known optical device that combines together the two polarization states of the optical energy input via fibers 26, 28. It may be a fused fiber device that couples the two polarization modes from the fibers 26, 28 into a single output fiber 32. The second output fiber receives only a small amount of the light coupled into the PBC, and is referred to as a "ghost port." The PBC 30 effectively recombines, power wise, the two light beams that exit the splitter 20. Thus, the optical power of light exiting the PBC is substantially the same as the total power originating from the pump source 12 (ignoring splice losses and insertion losses). However, the power has been split into two halves with phase decorrelated orthogonal polarizations. Thus, the resulting output beam in fiber 32 is essentially unpolarized.

Under some circumstances, the optical source described above might be sensitive to optical feedback. In such a case it may be desirable to use an optical isolator at the output. Such optical isolators are well known in the art, and are widely used in other optical systems. In FIG. 11 isolator 23 is shown in broken lines to indicate that it is an optional component.

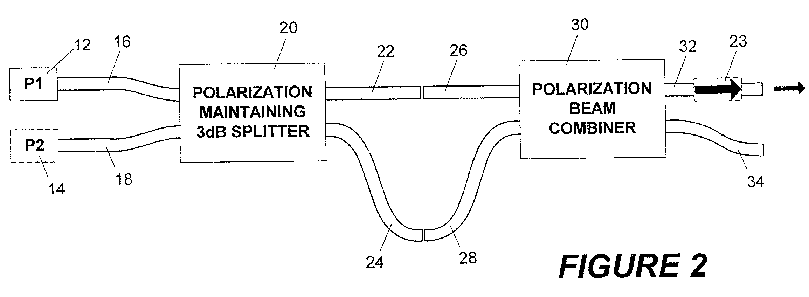

A variation of the embodiment of FIG. 1 is shown in FIG. 2. The system is essentially identical to that of FIG. 1I except that a second pump source 14 is coupled into the second input fiber of polarization maintaining 3dB splitter. The splitting provided by splitter/coupler 20 is the same as in the FIG. 1 embodiment, except that the light from each of the two sources is divided between the two output fibers 22, 24, rather than just the light from source 12. Thus, the output fibers 22, 24 each contain approximately half of the light originating from each of the two sources 12, 14. The remainder of the system operates identically to that of FIG. 11 with the difference in the optical path length between the path consisting of fibers 22, 26 and the path consisting of fibers 24, 28, and the combining of both polarization modes in PBC 30. Thus, the output along fiber 32 is again unpolarized, except that the power being output is effectively doubled, due to the use of two pump sources 12, 14, rather than just one. Notably, the two pump sources do not have to emit light at the same frequency as long as their wavelengths are within the operating wavelength range of both the 3dB splitter 20 and the PBC 30. Indeed it may be desirable to use sources with different wavelengths so as to provide a depolarized output that has multiple wavelengths. Such a device might be particularly useful for the pumping of a Raman gain medium. As in FIG. 1, an isolator 23 is shown at output path 32 in broken lines to indicate that it may be used with the source, if desired.

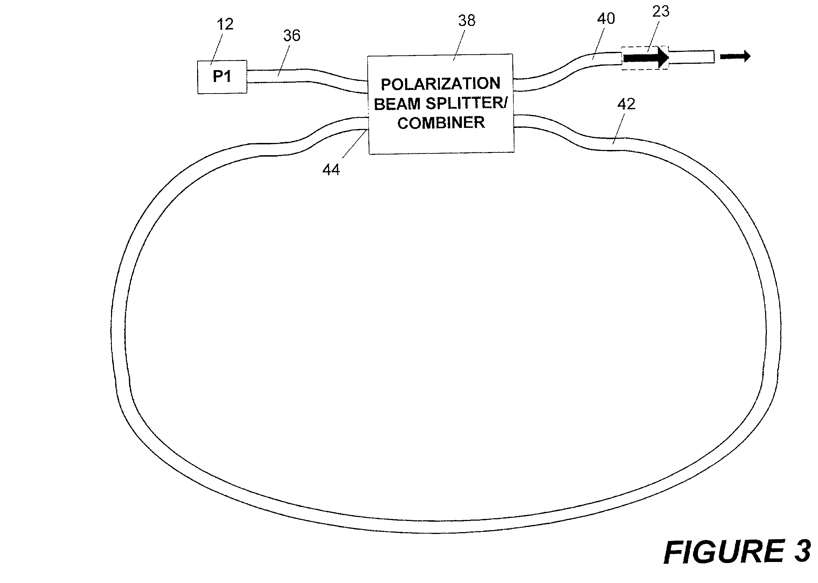

Shown in FIG. 3 is another embodiment of the invention that also makes use of a pump source 12 that has a predominantly linearly polarized output. In this embodiment, the source 12 couples light into polarization maintaining optical fiber pigtail 36, which is connected to a PBC 38. The PBC 38 has the same configuration of the PBC 30 of the previous embodiments. However, in the embodiment of FIG. 3, the light is coupled into fiber 36 such that its plane of polarization is at an angle relative to the polarization axis of the fiber 36. This angle is set in the vicinity of 45° however, as discussed further below, the specific angle is determined through an optimization procedure involving monitoring of the output of the system.

The light along each of the fast and slow axes of the fiber 36 is divided by the PBC such that it exits from different ports. For example, light traveling along the fast axis of fiber 36 might exit through output polarization maintaining fiber 40, in which case light traveling along the slow axis of fiber 36 would exit into polarization maintaining fiber 42. Of course, those skilled in the art will recognize that the invention might as easily have the light along the fast axis of fiber 36 exit through fiber 42, while the light along the slow axis exits along fiber 40. The light that is coupled into fiber 42 is recirculated back to a second input port 44 of the PBC. The light entering at this second input port, still traveling along the same polarization axis of the fiber 42 as when it entered it, is directed to the output fiber 40. It is thereby combined with the light that had originally traveled along the other polarization axis of fiber 36, and was coupled directly from fiber 36 to fiber 40. Preferably, fiber 42 is long enough that the difference in optical path length between light traveling directly from fiber 36 to fiber 40 and that traveling through fiber 42 is greater than the coherence length of the light source 12. This minimizes the phase coherence between the two beams when they are coupled together in the output fiber 40.

In the embodiment of FIG. 3, the PBC may be of the same configuration as described in previous embodiments, that is, it may be of a fused fiber type or of a micro-optic type. In order to maximize the unpolarized output at fiber 40, it is desirable to balance the contributions along each of the two polarization axes of the fiber 40. With the plane of polarization of the light from source 12 having an angle of 45° relative to the polarization axis of input fiber 36, the initial contributions of the two polarization states are roughly equal. However, one of the polarization states is coupled through the fiber 42 and passes through the PBC 38 a second time. Therefore, it tends to suffer more losses than the other polarization state. If unadjusted, this would result in a lower relative intensity in the output fiber 40 for one of the two polarization states. Therefore, it is desirable to balance this output during fabrication of the device. The output degree of polarization ("DoP") may be monitored while the angular orientation of the fiber 36 is adjusted relative to the source 12. When the DoP of light from fiber 40 is near a minimum value, a permanent splice may be made between the source 12 and the fiber 36 at the relative angular position that provided the minimum DoP output. Monitors capable of being used in this capacity are known in the art, and will be available to those practicing the invention. As in the previous embodiments, an isolator 23 is shown at output path 40 in broken lines to indicate that it may be used with the source, if desired.

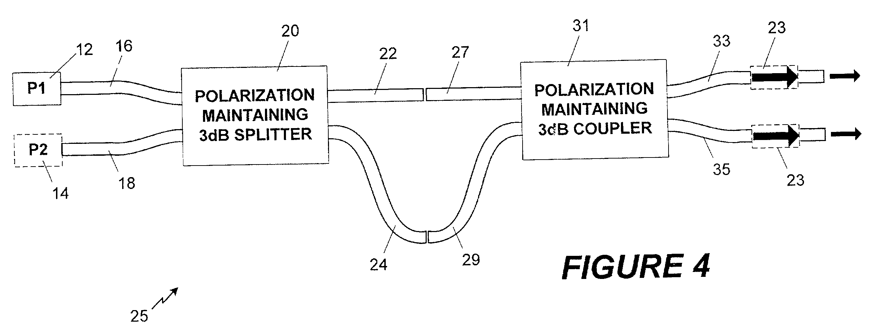

Depicted in FIG. 4 is a double output optical source 25 that is similar to the embodiments of FIGS. 1 and 2. Indeed, the first portion of the device is the same as in previous embodiments, with polarization maintaining 3dB splitter 20 receiving optical energy from optical generator 12 via input polarization maintaining fiber 16. The splitter 20 may also receive input optical energy from optical generator 14 via polarization maintaining input fiber 18, as in the embodiment of FIG. 2, although this is optional. Depending on whether there are one or two input optical sources, the polarization maintaining output fibers 22, 24 will carry the same optical beams as discussed above in conjunction with either FIG. 1 or FIG. 2. As in the previous embodiments, the relative angular orientation of the polarization axis of one of the two paths is rotated relative to the other prior to their being coupled in the coupler 31. For example, the angular orientation of the polarization axis of fiber 29 may be 90° relative to that of fiber 24 , while the orientation of the polarization axis of fiber 27 is aligned with that of fiber 22. Thus, while the different optical contributions in fibers 22 and 24 are in the same elative polarization states, they are at a 90° angle relative to each other when combined in coupler 31.

The outputs of fibers 22 and 24 are coupled to the input paths 27, 29 of polarization maintaining 3dB coupler 31. The coupler 31 may be the same type of device as the splitter 20, but it is described as a coupler since a primary part of its function is to couple together the light input along fibers 27, 29. This combined light is then distributed in a roughly 50/50 proportion along the output fibers 33, 35.

Also similar to the previous embodiments is the optical path delay provided to one of the two outputs of the splitter 20. This delay is demonstrated schematically in the figure by showing the fibers 24, 29 as being longer than fibers 22, 27. The actual length difference will obviously be much greater so that the total optical path delay is greater than the coherence length of either of the optical sources 12, 14. In the embodiment of FIG. 4, however, rather than all of the optical energy being output along one of the ports of the coupler 31I it is split between ports 33 and 35. That is contributions from each of the input fibers 27 and 29 may be found on fibers 33I 35. Since one of the two optical paths has been delayed, the two signals are effectively phase decorrelated in both of the output paths 33 and 35. Thus, two unpolarized outputs are generated. It will be noted that, in FIG. 4, the second optical source 14 is shown in dashed lines. This is to represent the fact that the second source is optional, and that two unpolarized output would still be obtainable with only a single input source. However, by using the second source, the output power of the two signals may be effectively doubled. Moreover, by using two sources having slightly different center wavelengths, the effective bandwidth of each of the output signals may be made wider , which can be quite desirable, particularly when used as optical pumps. As in previous embodiments, an isolator 23 is shown in each of output paths 33, 35 in broken lines to indicate that they may be used with the source, if desired.

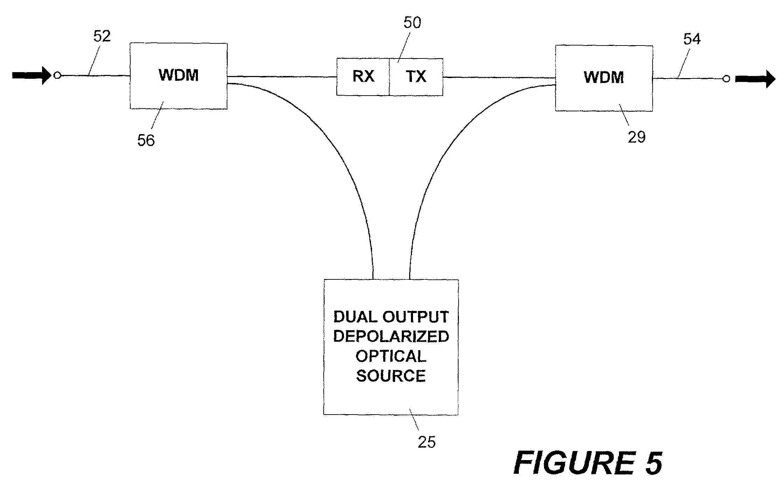

One possible application of a dual output depolarized source is shown in FIG. 5. A source 25, such as that shown in FIG. 4I has two optical outputs, each of which is effectively depolarized. The source is used at an optical regenerator site that includes a receiver/transmitter 50 used to convert between the optical and electrical signal domains. Such devices are well known in the art, and it will be understood that other electrical circuit components might also be used at the regenerator site for signal conditioning or other purposes. The signal arrives at the regenerator site from along optical transmission link 52, and is output from the site along output optical transmission link 54.

I n order to boost signal power both on the incoming and the outgoing optical links, the two outputs from source 25 are coupled, respectively, to each of the links 52, 54. A first output from the source 25 is coupled via wavelength division multiplexer (WDM) 56 to the input link 52. The light from this output of the source counter-propagates with the incoming signal, and provides distributed optical gain via, for example, stimulated Raman scattering. As mentioned previously, the depolarized nature of the light from the optical source is particularly suited for Raman amplification. Similarly, the other output from the source 25 is coupled into optical ling 54 via WDM 58. The light from this output co-propagates with the signal output from the receiver/transmitter 50, and provides distributed gain to that output signal. Again, the effectively depolarized nature of the pumping light is particularly suited to Raman amplification. Those skilled in the art will recognize that the optical source 25 would typically be part of the regenerator site, along with the receiver/transmitter 50 and WDMs 56, 58. Of course, this is just one example application for the dual output source 25, and other uses are anticipated.

While the invention has been shown and described with reference to a preferred embodiment thereof, it will be recognized by those skilled in the art that various changes in form and detail may be made herein without departing from the spirit and scope of the invention as defined by the appended claims. For example, although the embodiments above are described in terms of being depolarized optical sources, the same devices may be used without the optical signal generators as depolarizers for existing optical signals.

## Claims

1. A depolarized optical source comprising:
an optical generator having a polarized optical output;
a polarization maintaining optical splitter having a polarization maintaining input path and at least two polarization maintaining output paths, the optical output of the optical generator being coupled into the input path of the splitter; a polarization beam combiner having first and second polarization maintaining input paths coupled, respectively, to the first and second output paths of the splitter, the polarization beam combiner combining together the optical energy from the two input paths and outputting it along at least a first output path, the combined optical energy including a significant amount of optical energy in each of two orthogonal polarization states; and
a delay apparatus that provides an optical path delay between the optical energy input along the first input path of the polarization beam combiner and
the optical energy input along the second input path of the polarization beam combiner.

2. A depolarized optical source according to Claim 1 wherein the optical splitter comprises a 3dB splitter.

3. An optical source according to Claim 2 wherein one of the output paths of the 3dB splitter has a polarization axis at an angle of approximately 90° relative to a polarization axis of an input path of the beam combiner to which it is coupled.

4. An optical source according to Claim 3 wherein the output of the optical generator has a plane of polarization with a known angular orientation.

5. An optical source according to Claim 4 wherein the 3dB splitter has a second polarization maintaining input path, and wherein the optical source further comprises a second optical generator the output of which is coupled into the second input path of the 3dB splitter.

6. An optical source according to Claim 5 wherein the second optical generator has a distinctly different center wavelength than the first optical generator.

7. An optical source according to Claim 1 wherein the optical generator is a broadband optical generator.

8. An optical source according to Claim 1 wherein the beam combiner comprises a fused fiber device.

9. An optical source according to Claim 1 wherein the beam combiner comprises a micro-optic device.

10. An optical source according to Claim 1 wherein the optical generator is grating stabilized to operate in coherence collapse, and said delay apparatus provides an additional optical path length that is greater than a coherence length of the optical generator.

11. An optical source according to Claim 1 wherein the beam combiner is a 3dB coupler.

12. An optical source according to Claim 1 wherein the beam combiner includes a second output path and some of said combined optical energy from the two input paths is directed along each of said first and second output paths.

13. An optical source according to Claim 1 further comprising an optical isolator located in said output path.
